# EUROPEAN PATENT APPLICATION

(11) **EP 2 385 727 A1**
(43) Date of publication of application: **09.11.2011**
(21) Application number: 10305475.5
(22) Date of filing: 04.05.2010
(51) Int. Cl.: H04W 48/12

(54) **Method for controlling a terminal operable to access a wireless access network**

(71) Applicant: FRANCE TELECOM, 75015 Paris (FR)
(72) Inventor: Barankanira, Delphin, 92160 Antony (FR); Ahmed, Tansir, London, W45XS London (GB); Huang, Xiaofeng, 92350, Le Plessis Robinson (FR)
(74) Representative: Desormiere, Pierre-Louis

(57) **Abstract**

The invention relates to a method for controlling a terminal (102; 202) operable to access a wireless access network, the method comprising receiving an advertisement message (301B) from a point of access (104; 204) to a wireless access network (103; 203), extracting at least one element of identification information (320) included in the advertisement message (301B), wherein the at least one element of identification information (320) identifies at least one backbone network type supported by the wireless access network (103; 203), and identifying, based on the at least one extracted element of identification information (320), the at least one backbone network type supported by the wireless access network (103; 203).

Correlatively, the invention also relates to a point of access (104; 204) to a wireless access network (103; 203).

## Description

### Background of the invention

The invention relates to the connectivity of a terminal to a wireless access network (or WLAN for Wireless Local Area Network) and concerns more particularly interworking between different backbone types of WLAN networks.

Various ways exist today to access IP services over the Internet. A user may for instance access the Internet by connecting his user equipment (a terminal such as a mobile phone, a personal digital assistants (PDAs), a computer etc.) to a wireless router (a LiveBox^{™} for example). Such a wireless router is then capable of routing traffic to the Internet via the conventional broadband network (via DSL cables or fiber optics for instance).

Today's cellular technologies also allow users to establish a connection while they are roaming in different geographical areas. For instance, third generation (3G) networks (UMTS, CDMA2000 networks...) are now deployed in most of industrialised countries, allowing simultaneously wide-area wireless voice telephone calls and wireless data transfer all in a mobile environment.

Mobile technologies such as 3G systems are in constant development. The 3^{rd} Generation Partnership Project (3GPP) for instance is a collaboration between groups of telecommunications associations in charge of drawing up a globally applicable third generation (3G) mobile phone system specification. 3GPP specifications are based on evolved Global System for Mobile Communications (GSM) specifications.

Recently, the 3GGP collaboration has been developing standards for two new 3GPP architectures: Interworking WLAN (I-WLAN) and Evolved Packet System (EPS).

More particularly, the I-WLAN architecture was introduced in the release 8 of the 3GPP standards (see also the standard 3GPP TS 23.234 v9.0.0, "3GPP System to Wireless Local Area Network (WLAN) Interworking; System Description (Release 9)", Dec. 2009). I-WLAN networks are characterised in that they support inter-technology mobility and session continuity for any application between 3GPP and I-WLAN accesses.

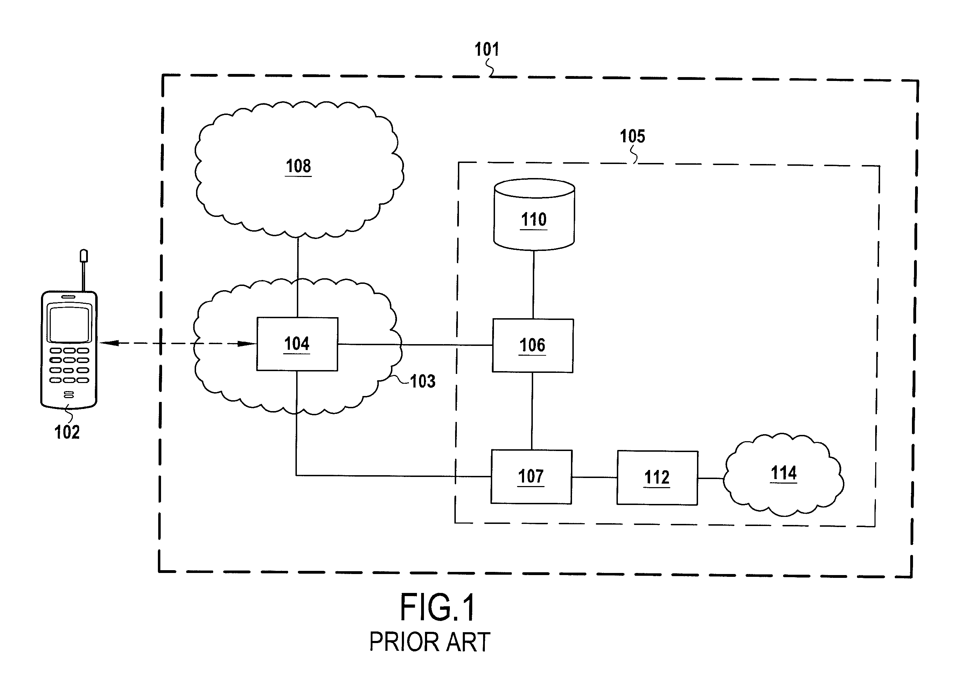

Figure 1 depicts an example of an I-WLAN backbone network 101.

Terminal 102 is an equipment used by a subscriber to access a WLAN access network 103. Once a point of access 104 to the WLAN access network 103 has been detected during a discovering mechanism, terminal 102 initiates a connection procedure to attach to this particular access point 104, using WiFi technology for instance. Depending on the terminal's configuration and the user's service subscriptions, the point of access 104 will either route the data traffic directly to the locally connected IP network 108 (which can be Intranet or Internet) or to the external packet data network (PDN) 114 (such as 3G operator's data network, corporate Intranets or Internet) via the 3GPP network 105.

The WLAN access network 103 serves as a relay between terminal 102 and a 3GPP AAA server 106 located within the 3GPP network 105. The 3GPP AAA server 106 is notably in charge of WLAN access authentication and authorization for the subscriber requesting a connection to the locally connected IP network 108 or to the external PDN 114 through the 3GPP system 105. To perform the authentication and authorisation procedure, the 3GPP AAA server 106 consults the subscriber data stored within a trusted database 110 (generally termed a Home Subscriber Server (HSS)) and sends back a message to the WLAN access network 103 indicating whether the connection request is accepted or rejected.

If the connection request is accepted, the 3GPP AAA server 106 establishes a connection between the subscriber's terminal 102 and a locally connected IP network 108 or an external PDN 114. An external PDN 114 may be the Internet or a closed packet network fully maintained by the operator of the 3GPP network 105. A packet data gateway (PDG) 112 is responsible for routing data packets between terminal 102 and PDN 114. The WLAN access gateway (WAG) 107 enforces routing of packets through the PDG 112.

Turning to the EPS architecture, it was first defined in the 3GPP standard TS 23.402 v9.3.0 entitled *"Architecture Enhancements for Non-3GPP Accesses (Release 9)"* (December 2009). EPS systems allow different heterogeneous access systems to connect to a common core network (EPC). EPS systems share many common concepts and components with I-WLAN systems but the EPS architecture is generally seen as more flexible in terms of use than its I-WLAN counterpart.

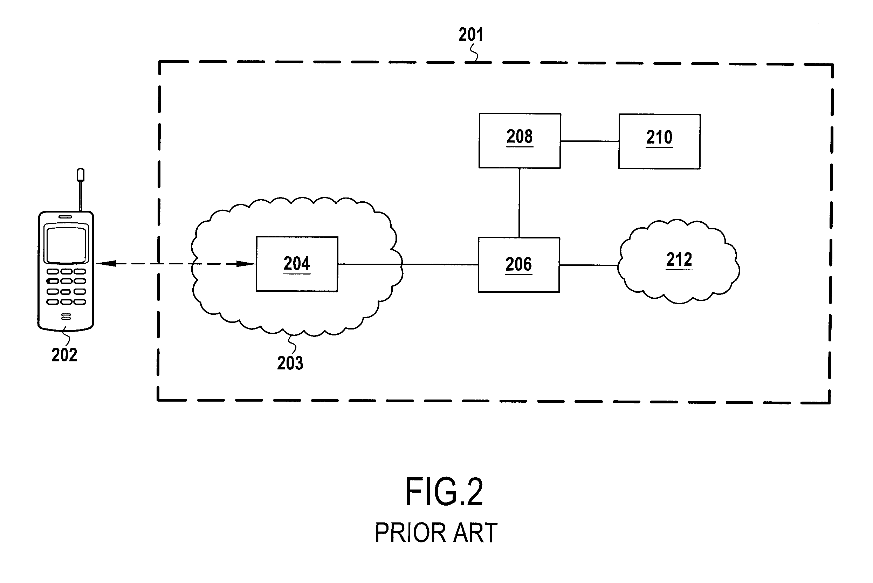

Figure 2 depicts an example of an EPS network 201 for WLAN access. As for terminal 102, terminal 202 is a user equipment capable of connecting to a non-3GPP WLAN access network 203, and more specifically to a point of access 204 of access network 203. The main distinction with figure 1 lays in the fact that WLAN access network 203 is part of an EPS network 201.

The packet data network gateway (PDN GW) 206 located in EPS network 201 plays a role similar to PDG 112 in I-WLAN network 101. Namely, PDN GW 206 is responsible for routing data traffic between terminal 202 and a PDN 212. Prior to establishing IP connectivity with PDN 212, PDN GW 206 communicates with 3GPP AAA server 208 to determine whether the connection request originating from terminal 202 should be accepted. The authentication and authorisation procedure is performed by the 3GPP AAA server 208 using subscriber data retrieved from HSS database 210.

It is assumed in figure 2 that access network WLAN 203 is a "trusted" non-3GPP access network. In other words, the network's operator considers that WLAN 203 can be trusted such that data traffic can be directly routed from WLAN 203 to PDN gateway 206.

The elements constituting an I-WLAN backbone network and an EPS backbone network and their respective functioning are known to those skilled in the art and thus they will be no more described in the present document. In this respect, it is noted that some elements (servers etc...) generally included in I-WLAN and EPS systems have been deliberately omitted in figures 1 and 2 for the sake of simplicity. Those skilled in the art would however realise that other elements may be added and that the architectures illustrated in figures 1 and 2 are simply provided as a way of example. In any case, the present invention should not be construed as pertaining exclusively to these exemplary backbone networks.

Further, the EPS and I-WLAN technologies both support WLAN as non-3GPP wireless access technology. However, once the user's terminal is attached to a point of access to a WLAN access network, the access/connection procedure to be performed by the terminal strongly depends upon the backbone network type of the target network. The authentication and authorization mechanisms, mobile protocols, etc. will also depend upon the considered backbone network type.

Accordingly, to establish a connection, a terminal has to be compatible with the backbone network type of the target network (i.e. the terminal must support the backbone network type of the target network). A terminal may be configured to access I-WLAN networks only, EPS networks only, or both. Yet, most of today's terminals are only configured to access conventional WLAN network, but not yet configured to access any of these new types of architecture. A conventional WLAN network which does not belong to an I-WLAN network or to an EPS network is named as "standalone WLAN network". The access/connection procedure for a standalone WLAN network is again entirely different than that of either I-WLAN or EPS network.

Further, when a terminal discovers a reachable point of access to a WLAN network, it can attempt to establish a connection therewith in accordance with a predetermined access configuration. The terminal may for instance operate in accordance with an "I-WLAN" configuration, an "EPS" configuration or a "standalone" configuration. However, the inventors have noted that, today, a terminal has no means to know beforehand whether its particular access configuration is adapted to access a target WLAN network. Once the terminal has sent a connection request to a discovered point of access, it has to wait for a response from the target WLAN. It is only based on the response received that the terminal will determine whether the connection request has been accepted or rejected.

As a result, a user equipment which only supports I-WLAN technology, for instance, may discover a EPS backbone network and unnecessarily attempts to establish a connection therewith (and vice versa). Today's terminals can thus embark into network access procedures with incompatible WLAN networks, thereby causing useless traffic between WLAN networks and user equipments. This inefficiency in terms of access procedure is bond to grow even further with other new architectures likely to be developed and deployed in the near future.

Accordingly, there is a need in the art for a system allowing interoperability between user equipments and multiple WLAN backbone types.

### Summary of the invention

The present invention provides a method for controlling a terminal operable to access a wireless access network, the method comprising receiving an advertisement message from a point of access to a wireless access network, the method being characterised in that it further comprises:
- extracting at least one element of identification information included in the advertisement message, wherein the at least one element of identification information identifies at least one backbone network type supported by the wireless access network, and
- identifying, based on the at least one extracted element of identification information, the at least one backbone network type supported by the wireless access network.

The present invention enables a terminal to identify the backbone network type(s) supported by a reachable wireless access network, thereby avoiding unnecessary connection attempts and thus allowing a significant gain in efficiency in terms of access procedure. Based on the backbone network type(s) supported by a particular wireless access network, a terminal can determine how to best interact with a target wireless access network.

According to a particular embodiment of the invention, the method for controlling a terminal further comprises determining that a connection can be established with the point of access when at least one backbone network type identified at the identifying step is supported by the terminal.

The terminal can then determine how to best interact with a wireless access network. If the terminal and the wireless access network share at least one supported backbone network type in common, this means that the terminal can initiate a connection procedure with the wireless access network. However, if none common supported backbone network type exist, it means that the terminal cannot establish a connection with the wireless access network. Accordingly, no connection request should be sent from the terminal to the point of access.

According to another embodiment of the invention, the method for controlling a terminal further comprises when a single backbone network type is identified at the identifying step and the identified backbone network type is supported by the terminal, establishing a connection with the point of access in accordance with the identified backbone network type.

The invention allows the terminal to determine which connection/access procedure to execute once a point of access to a wireless access network has been discovered. The invention also enables the terminal to determine which authentication and authorisation mechanism will be used with the wireless access network and which mobility protocols will be supported.

According to another embodiment of the invention, the method for controlling a terminal further comprises when a plurality of backbone network types are identified at the identifying step and at least two of the plurality of identified backbone network types are supported by the terminal, selecting one among the at least two backbone network types and establishing a connection with the wireless access network in accordance with the selected backbone network type.

This particular embodiment enables the terminal to select the most appropriate backbone network type when more than one backbone network type can be used by the terminal to establish a connection with the wireless access network. In this particular embodiment, the selecting step can be carried out in accordance with a predefined access policy defining an order of preferred backbone network types. This allows the terminal to establish a connection with the wireless access network in an optimised manner when the terminal and the wireless access network share more than one supported backbone network type in common.

In a particular embodiment of the invention, the various steps of the method for controlling a terminal according to the invention are specified by computer program instructions.

Accordingly, the invention also provides a computer program on a recording medium, this computer program being arranged to be implemented by a terminal, and more generally by a processor, this computer program comprising instructions adapted for the implementation of a method for controlling a terminal as described above.

The invention also provides a recording medium readable by a terminal, or more generally by a processor, this recording medium comprising computer program instructions as mentioned above.

Correlatively, the invention provides a method for controlling a point of access to a wireless access network, the method comprising sending an advertisement message to a terminal operable to access said wireless access network, the method being characterised in that it further comprises inserting at least one element of identification information into the advertisement message prior to the sending of said advertisement message, wherein the at least one identification information identifies at least one backbone network type supported by the wireless access network.

The invention enables a point of access to a wireless access network to advantageously announce to reachable terminals the backbone network type(s) that it supports. The invention can take advantage of the advertisement messages usually sent by a point of access to reachable terminals.

In a particular embodiment of the invention, the various steps of the method for controlling a point of access according to the invention are specified by computer program instructions.

Accordingly, the invention also provides a computer program on a recording medium, this computer program being arranged to be implemented by a point of access to a wireless access network, and more generally by a processor, this computer program comprising instructions adapted for the implementation of a method for controlling a point of access as described above.

The invention also provides a recording medium readable by a point of access to a wireless access network, or more generally by a processor, this recording medium comprising computer program instructions as mentioned above.

The various computer programs mentioned above can be expressed in any programming language, and can be in the form of source code, object code, or any intermediary code between source code and object code, such that in a partially-compiled form, for instance, or in any other appropriate form.

In addition, the recording medium previously mentioned can be any entity or device capable of storing the computer program. For example, the recording medium can comprise a storing means, such as a ROM memory (a CD-ROM or a ROM implemented in a microelectronic circuit), or a magnetic storing means such as a floppy disk or a hard disk for instance.

Moreover, each recording medium previously mentioned can correspond to a transmittable medium, such as an electrical or an optical signal, which can be conveyed via an electric or an optic cable, or by radio or any other appropriate means. The computer program according to the invention can in particular be downloaded from the Internet or a network of the like.

Alternatively, the recording medium can correspond to an integrated circuit in which a computer program is loaded, the circuit being adapted to execute or to be used in the execution of the methods of the invention.

In particular, the invention provides a signal emitted by a point of access to a wireless access network, the signal carrying an advertisement message including at least one element of identification information, the at least one element of identification information identifying at least one backbone network type supported by said wireless access network.

The invention also provides a terminal operable to access a wireless access network, the terminal comprising receiving means for receiving an advertisement message from a point of access to a wireless access network, the terminal being characterised in that it further comprises:
- extracting means for extracting at least one element of identification information included in said advertisement message, wherein said at least one element of identification information identifies at least one backbone network type supported by said wireless access network, and
- identifying means for identifying, based on the at least one extracted element of identification information, the at least one backbone network type supported by said wireless access network,

It should be noted that the various embodiments described above in reference to the method for controlling a terminal according to the invention can be implemented in an analogous manner in relation with the terminal of the invention. In addition, the advantages and comments set out above in reference to the various embodiments of the method for controlling a terminal apply in an analogous manner to the various embodiments of the terminal according to the invention.

In a particular embodiment of the invention, the terminal further comprises determining means for determining that a connection can be established with the point of access when at least one backbone network type identified by the identifying means as supported by the wireless access network is also supported by the terminal.

The terminal can further comprise selecting means configured, when a plurality of backbone network types are identified by the identifying means and at least two of the identified backbone network types are also supported by the wireless access network, to select one among the at least two backbone network types, and
connecting means configured to establish a connection with the wireless access network in accordance with the selected backbone network type.

Correlatively, the invention provides a point of access to a wireless access network, the point of access comprising sending means for sending an advertisement message to a terminal operable to access the wireless access network, the point of access being characterised in that it further comprises inserting means for inserting at least one element of identification information into the advertisement message prior to the sending of the advertisement message, wherein the at least one element of identification information identifies at least one backbone network type supported by the wireless access network.

### Brief description of the drawings

The invention including preferred embodiments and advantages thereof will be described below in detail, by way of example, with reference to the accompanying drawings:
- figure 1 is a block diagram of the components of an exemplary I-WLAN backbone network as known in the art;
- figure 2 is a block diagram of the components of a exemplary EPS backbone network as known in the art;
- figure 3A shows the format of an exemplary advertisement message;
- figure 3B shows an advertisement message according to a particular embodiment of the invention;
- figure 4 is a block diagram of the main hardware components of a terminal according to an embodiment of the invention;
- figure 5 is a block diagram of the main hardware components of a point of access according to an embodiment of the invention;
- figure 6 is a flowchart showing the main steps of a method for controlling a terminal according to a particular embodiment of the invention; and
- figure 7 is a flowchart showing the main steps of a method for controlling a point of access according to a particular embodiment of the invention.

### Detailed description of a particular embodiment of the invention

The invention relates to a method for controlling a terminal operable to access a wireless access networks, the method allowing the terminal to identify one or more backbone network types supported by a target wireless access network.

In this document, a terminal designates a computer, a mobile phone, a PDA or any other user equipment of the like capable of accessing a wireless access network.

To alleviate the drawbacks described above, the inventors have come to the conclusion that it is necessary to provide terminals with the capability of identifying the backbone network type(s) supported by a target WLAN access network. Conversely, it is necessary to enable the points of access (POAs) to a WLAN access network to advertise the backbone network type(s) that its support. To do so, the invention proposes taking advantage of the discovering mechanism performed by each terminal prior to connecting to a particular POA.

More particularly, a terminal must usually perform a discovering mechanism to detect the presence of reachable POAs to WLAN access networks. Both the I-WLAN and EPS technologies deploy IEEE 802.11 standard specified discovery mechanism for discovering reachable WLAN access networks. This discovery mechanism functions as a scanning procedure, which can be either active or passive.

In the active scanning mode, the user equipment actively looks for a particular WLAN access network. To do so, the terminal sends Probe Request messages to all reachable POAs. A probe request message contains various Information Elements (IEs), and among others a SSID (Service Set ID) Information Element which identifies a specific WLAN access network. In response to the probe request message, the terminal receives a corresponding Probe Response from each reachable POA supporting the solicited SSID.

In the passive scanning mode, however, the terminal does not send Probe Request messages. The terminal is instead configured to monitor Beacon signals periodically broadcasted by reachable POAs. More particularly, the terminal receives and interprets Beacon signal frames broadcasted by reachable POAs, and determines the SSID information element contained therein. The SSID information element identifies the WLAN access network from which the Beacon signal originates.

A Probe Response and a Beacon signal both correspond to an advertisement message, that is, a message which allows a WLAN access network to advertise various network characteristics. Once a Probe Response or Beacon signal containing the appropriate SSID information element is received, the terminal can attach to the corresponding POA and initiate a connection procedure.

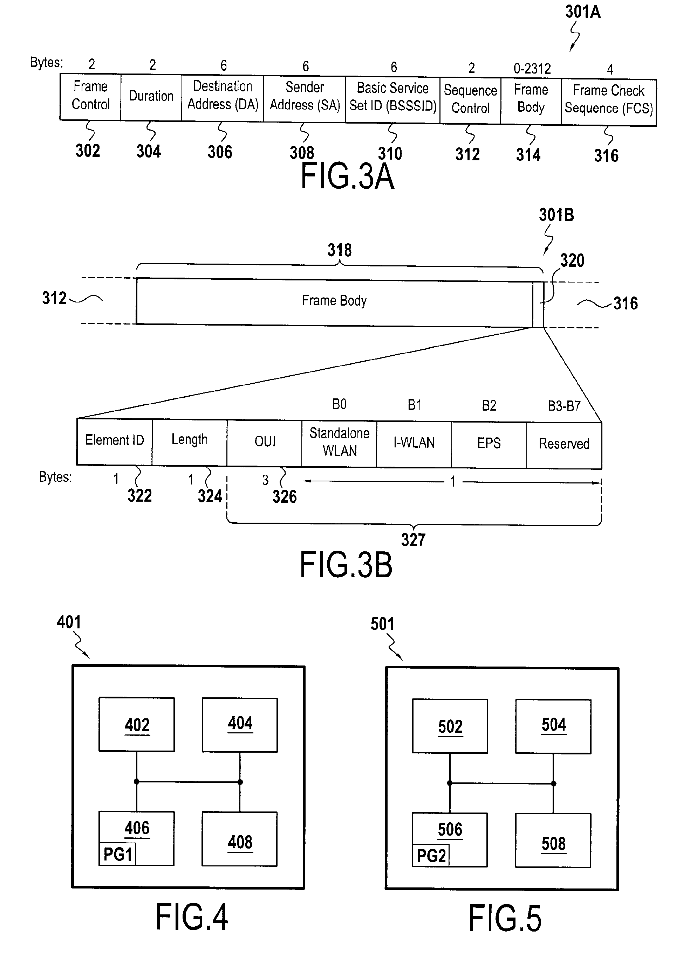

Figure 3A depicts an example of such an advertisement message according to IEEE 802.11 standard (see standard entitled "Part 11: Wireless LAN Medium Access Control (MAC) and Physical Layer (PHY) Specifications" dated June 2007).

In the example of figure 3A, the advertisement message 301A contains a plurality fields referenced from 302 to 316 each containing a predefined element of information in a standardized format (the destination address 306 of the advertisement message 301A, the sender address 308 of the advertisement message 301A etc.).

The frame body field 314 contains a number of IEs. The number and nature of these IEs may vary depending upon the configuration of the emitting POA from which the advertisement message 301A originates. The IEs may correspond for instance to characteristics such as Beacon Interval (interval of time between each Beacon signal), the SSID associated with the emitting POA, QoS capability of the emitting POA, power constraint, etc.

According to IEEE 802.11 standard, the frame body 314 can also include one or more Vendor Specific IEs, that is, IEs allocated for specific use to the network operator or to the emitting POA's manufacturer. In a Beacon signal frame, for instance, the Vendor Specific IEs are positioned as the last IEs of the frame body whereas in a Probe Response frame, Vendor Specific IEs are positioned as the second last IE of the frame body.

Upon reception of a Beacon signal frame or a Probe Response, a terminal is able to identify an IE within the frame body as a Vendor Specific IE. Such a recognition is possible based on the position of the IE within the frame body and on an identifier named "element ID" (IE ID) contained within the IE.

The advertisement message 301A should however be construed as a mere example such that other arrangements of advertisement messages can be contemplated within the scope of the present invention.

The invention proposes inserting a new Vendor Specific IE within the advertisement message frames sent by emitting POAs. One aim of such an insertion is to identify the backbone network type supported by a particular POA.

Figure 3B shows the format of an advertisement message 301B according to a particular embodiment of the present invention. In this example, it is assumed that advertisement message 301B is a Beacon signal frame (i.e. an unsolicited advertisement message) such that any Vendor Specific IE is to be positioned at the very end of the frame body 318. In addition, advertisement message 301B comprises the same fields 302 to 312 and 316 as illustrated in figure 3A.

However, in this embodiment, the frame body 318 of advertisement message 301B differs from the frame body 314 of advertisement message 301A. More particularly, a new Vendor Specific IE 320 named "WLAN Backbone Type IE" is inserted at the end of the frame body 318 of advertisement message 301B.

In this example, the format of the WLAN Backbone Type IE 320 complies with IEEE 802.11 standard.

More specifically, the WLAN Backbone Type IE 320 is 6-byte long. The first field 322 contains the Element ID (1-byte long). In this case, the Element ID identifies IE 320 as a Vendor Specific IE. The second field 324 defines the total length of the WLAN Backbone Type IE 320 (1-byte long). The last field 327 of the WLAN backbone type IE 320 corresponds to the information field (4-byte long).

The first three bytes of the information field 327 contain an OUI (Organizationally Unique Identifier) field 326. The OUI field 326 contains an OUI which identifies the entity which has defined the content of the WLAN Backbone Type IE 320. The OUI in question is generally assigned by the IEEE. The last byte of the information field 327 contains eight bits named B0 to B7.

In this particular embodiment, the first bit B0 serves to specify whether the WLAN access network from which advertisement message 301B originates is a standalone network or not. In this example, when B0 is set at 0, this means that the associated WLAN access network is not a standalone network. Conversely, when B0 is set at 1, this means that the associated WLAN access network is a standalone network.

Similarly, bits B1 (respectively B2) serves in this example to specify whether the WLAN access network from which advertisement message 301B originates support the I-WLAN backbone network type (respectively the EPS backbone network type) or not. When B1 (respectively B2) is set at 0, this means that the associated WLAN access network does not support the I-WLAN backbone network type (respectively the EPS backbone network type). Conversely, when B1 (respectively B2) is set at 1, this means that the associated WLAN access network does support the I-WLAN backbone network type (respectively the EPS backbone network type).

The remaining bits B3 to B7 are available for future extension in case the network operator wishes to advertise new backbone network types for instance (or supplementary information of another kind). The remaining bits can be all set at zero, for instance.

It should be noted that other arrangements of the WLAN backbone type IE 320, and more generally of advertisement message 301B, can be contemplated within the scope of the invention. In particular, the order of the field sequence and of the arrangement of bits B0 to B7 may be adapted as appropriate. In addition, the number of bits identifying the supported backbone network types may be adapted depending on the needs and requirements of each case.

A terminal according to a particular embodiment of the invention will now be briefly described in reference to figure 4.

More specifically, figure 4 depicts a terminal 401 operable to access a wireless access network. In this example, terminal 401 presents the hardware architecture of a computer. In particular, terminal 401 comprises a processor 402, a RAM memory 404, a ROM memory 406 and a communication interface 408 enabling terminal 401 to communicate with WLAN access networks (based on WiFi technology for instance).

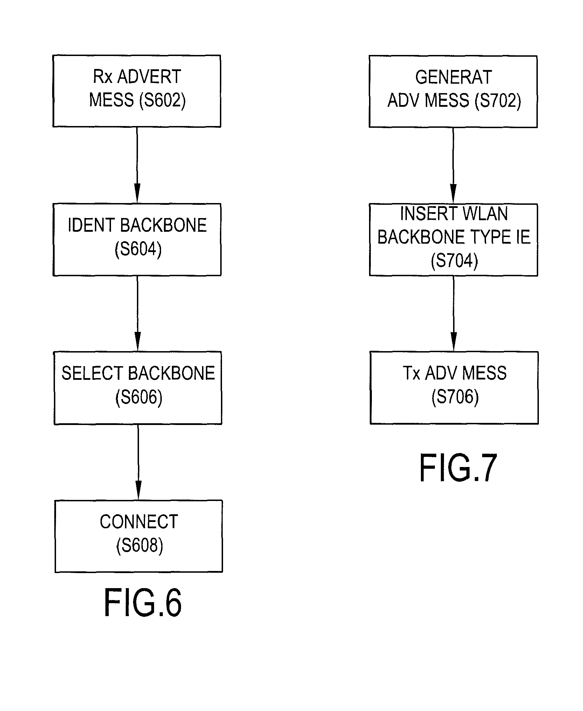

The ROM memory 406 of terminal 401 constitutes a recording medium in accordance with the invention. The ROM memory 406 includes a computer program PG1 according to the invention, this computer program comprising instructions to implement a method of the invention, which main steps (S602 to S608) are shown in the flowchart of figure 6.

Further, figure 5 depicts a POA 501 to a wireless access network according to a particular embodiment of the invention.

In this example, POA 501 presents the hardware architecture of a computer. In particular, POA 501 comprises a processor 502, a RAM memory 504, a ROM memory 506 and a communication interface 508 enabling POA 501 to communicate with terminals such as terminal 401 (based on WiFi technology for instance).

The ROM memory 506 of POA 501 constitutes a recording medium in accordance with the invention. The ROM-type memory 506 includes a computer program PG2 according to the invention, this computer program comprising instructions to implement a method of the invention, which main steps (S702 to S706) are shown in the flowchart of figure 7.

The POA 501 may for example have the hardware architecture of a gateway or a router.

A particular embodiment of the invention will now be described in reference to figures 4,5,6 and 7.

POA 501 first generates an advertisement message (S702). This advertisement message may be a Beacon signal frame or a Probe response to a Probe Request message, as described earlier. However, other kinds and formats of advertisement messages may be contemplated within the scope of the invention. In this example, it will be assumed that the general format of the generated advertisement message is as described in figure 3B.

POA 501 is configured to insert at least one element of identification information into the generated advertisement message (S704). The element of identification information inserted into the advertisement message identifies at least one backbone network type supported by the wireless access network to which the POA belongs. In this example, it will be assumed that the inserted element of identification information presents the same format as the WLAN Backbone Type IE 320 described in reference to figure 3B.

Further, in this example, the POA 501 may support the I-WLAN backbone network type and/or the EPS backbone network type. Alternatively, POA 501 may belong to a standalone backbone network.

In this case, we will assume that POA 501 supports both the I-WLAN and EPS backbone network types. Accordingly, bit B0 of the identification information is set at 0 and bits B1 and B2 are set at 1.

Once the element of identification information has been inserted, POA 501 sends the advertisement message (S706) using communication interface 508.

The generating step, inserting step and sending step are all implemented by processor 502 using RAM memory 404 and ROM memory 406. The sending of the advertisement message is implemented by the connection interface 508.

If the terminal 401 is located within a reachable area, it will then receive the advertisement message sent by POA 501 (S602). Such a reception is performed by the connection interface 408 of POA 501. This reception step may be performed according to the active or passive scanning mode as described above.

Once received, terminal 401 analyses the content of the advertisement message and determine if at least one element of identification information is included therein. In this example, terminal 401 detects an element of identification information taking the form of the WLAN Backbone Type IE 320 described in reference to figure 3B (S604).

Based on the element of identification information detected within the advertisement message, terminal 401 determines how this advertisement message is to be handled.

More specifically, terminal 401 is capable of determining, based on the state of bits B0, B1 and B2, which backbone network type(s) is(are) supported by the target access network (i.e. the wireless access network POA 501 belongs to).

Terminal 401 then consults its ROM memory 406 to determine the backbone network type(s) that it supports. In other words, terminal 401 retrieves from memory 406 the list of the compatible backbone network types. It should be noted that this list may contain a single backbone network type which is accessible by said terminal 401, or alternatively a plurality thereof. Terminal 401 may detect for instance that it is configured to access only I-WLAN backbone networks, only EPS backbone networks, these two architectures or none thereof (standalone configuration).

By comparing the backbone network type(s) detected as supported by the target access network against the detected compatible backbone network type(s) (i.e. the backbone network type(s) supported by the terminal), terminal 401 can determine whether a connection can be established with POA 501.

In the present case, it is assumed that terminal 401 detects that both I-WLAN and EPS backbone network types are supported by the target access network. If terminal 401 detects that its configuration does not allow connectivity to both I-WLAN and PES backbone network types, then terminal 401 ignores the advertisement message sent from POA 501 and no connection procedure is to be initiated. On the opposite, if terminal 401 detects that its configuration allows connectivity to at least one of these two backbone network types, then a connection can be established with POA 501.

Further, when terminal 401 determines that it supports a plurality of backbone network types which are also supported by the target access network, terminal 401 is configured to select one among the plurality of possible backbone network types (S606).

In the present case, it is assumed that terminal 401 can access both I-WLAN and EPS backbone networks. In this case, terminal 401 is configured to select one backbone network type among I-WLAN and EPS (S606). The selection process may be performed in different ways. For instance, terminal 401 may retrieve from ROM memory 406 an order of preference of the compatible backbone network types. More generally, terminal 406 selects the most appropriate backbone network type based on a predefined access policy stored within ROM memory 406. This access policy may specify which backbone network type should be selected depending on various parameters (the QoS offered by POA 501, the date/time, subscriber service data, user preference, service provider's policy, etc...).

In any case, the backbone network type selected by terminal 401 must be supported by both terminal 401 and the target WLAN access network to which POA 501 belongs.

Terminal 401 may for example be configured such that I-WLAN is the most preferred backbone network type, EPS being an alternative in case I-WLAN is not supported by the target access network (or vice versa).

Once selection process has been completed at step S606, terminal 401 initiates a connection procedure with POA 501 in accordance with the selected backbone network type (S608).

In addition, in this example, when no element of identification information in the sense of the invention is detected within the received advertisement message at step S604, terminal 401 is configured to ignore the advertisement message in question. In another embodiment, when the target WLAN access network is identified as a standalone backbone network, terminal 401 could be configured to initiate a connection procedure with POA 501 using a standalone-type configuration.

In an alternative to the embodiment described above, once steps S602 and S604 have been completed, terminal carries out at least another action than selecting backbone network types and/or establishing a connection.

For instance, terminal may download software or any data necessary to establish a connection with POA 501 according to an appropriate connection procedure. This may be useful, for instance, if terminal 401 does not have any supported backbone network type in common with the target WLAN access network. In this case, terminal 401 can have configuration data so as to be capable of establishing a connection with POA 501 according to the most appropriate procedures.

The identifying step S604, the selecting step S606, the connecting step S608 (and any other actions such as downloading configuration data) are all performed by processor 402 using RAM memory 404 and ROM memory 406.

The present invention allows interoperability between terminals and backbone networks of any kind.

In particular, the invention allows a terminal to identify the backbone network type(s) supported by a particular wireless access network. Conversely, the invention allows a POA to advertise its supported backbone network type(s) to each reachable terminal.

The invention can be used to identify any backbone network type supported by an access network. In particular, the invention is applicable for identifying the backbone network type(s) supported by an access network using IEEE 802.11 WLAN standard (i.e. WiFi). The invention applies notably to the three current types of deployment: (1) Standalone WLAN (2) I-WLAN and (3) EPS.

The invention enables a terminal to handle in the most appropriate manner an advertisement message received from a point of access to a wireless access network. The invention also enables a terminal to determine whether it can establish a connection with a particular POA or whether connectivity is forbidden.

The invention further allows a terminal to determine which access/connection procedure should be performed to establish a connection with a particular POA.

Unnecessary traffic between terminals and POAs can be advantageously avoided since, based on a received advertisement message, a terminal can determine whether a connection request can or cannot be sent to a particular POA.

The invention can also allow a terminal to establish a connection with a POA in accordance with a most preferred connection procedure when the terminal and the POA support more than one backbone network type in common.

It is also noted that the present application apply to unsolicited advertisement messages such as Beacon signals (passive scanning mode) as well as to solicited advertisement messages such as Probe Responses (active scanning).

## Claims

1. Method for controlling a terminal (102; 202) operable to access a wireless access network, said method comprising receiving an advertisement message (301B) from a point of access (104; 204) to a wireless access network (103; 203), said method being **characterised in that** it further comprises:
- extracting at least one element of identification information (320) included in said advertisement message, wherein said at least one element of identification information identifies at least one backbone network type supported by said wireless access network, and
- identifying, based on said at least one extracted element of identification information, the at least one backbone network type supported by said wireless access network.

2. Method of claim 1 further comprising determining that a connection can be established with said point of access when at least one backbone network type identified at the identifying step is supported by said terminal.

3. Method of claim 2, further comprising when a single backbone network type is identified at the identifying step and said identified backbone network type is supported by said terminal, establishing a connection with said point of access in accordance with the identified backbone network type.

4. Method of any one of claims 1 to 3 further comprising when a plurality of backbone network types are identified at the identifying step and at least two of said plurality of identified backbone network types are supported by said terminal, selecting one among said at least two backbone network types and establishing a connection with said wireless access network in accordance with the selected backbone network type.

5. Method of any one of claim 4, wherein the selecting step is carried out in accordance with a predefined access policy defining an order of preferred backbone network types.

6. Computer program (PG1) comprising instructions for carrying out the method of any one of claims 1 to 5 when said computer program is run on a computer.

7. Recording medium (406) readable by a computer, said recording medium storing a computer program (PG1) comprising instructions for carrying out the method of any one of claims 1 to 5.

8. Method for controlling a point of access (104; 204) to a wireless access network (103; 203), said method comprising sending an advertisement message (301B) to a terminal (102; 202) operable to access said wireless access network, said method being **characterised in that** it further comprises
inserting at least one element of identification information (320) into said advertisement message prior to the sending of said advertisement message, wherein said at least one element of identification information identifies at least one backbone network type supported by said wireless access network.

9. Computer program (PG2) comprising instructions for carrying out the method of claim 8 when said computer program is run on a computer.

10. Recording medium (501) readable by a computer, said recording medium storing a computer program (PG2) comprising instructions for carrying out the method of claim 8.

11. Signal emitted by a point of access (104; 204) to a wireless access network (103; 203), said signal carrying an advertisement message (301B) including at least one element of identification information (320), said at least one element of identification information identifying at least one backbone network type supported by said wireless access network.

12. Terminal (102; 202) operable to access a wireless access network, said terminal comprising receiving means (402, 408) for receiving an advertisement message (301B) from a point of access (104; 204) to a wireless access network (103; 203), said terminal being **characterised in that** it further comprises:
- extracting means (402) for extracting at least one element of identification information (320) included in said advertisement message, wherein said at least one element of identification information identifies at least one backbone network type supported by said wireless access network, and
- identifying means (402) for identifying, based on said at least one extracted element of identification information, the at least one backbone network type supported by said wireless access network.

13. Terminal of claim 12 further comprising determining means (402) for determining that a connection can be established with said point of access when at least one backbone network type identified by the identifying means as supported by said wireless access network is also supported by said terminal.

14. Terminal of claim 13 further comprising selecting means configured, when a plurality of backbone network types are identified by said identifying means and at least two of said identified backbone network types are also supported by said wireless access network, to select one among said at least two backbone network types, and
connecting means (402, 408) configured to establish a connection with said wireless access network in accordance with the selected backbone network type.

15. Point of access (104; 204) to a wireless access network (103; 203), said point of access comprising sending means (502; 508) for sending an advertisement message (301B) to a terminal (102; 202) operable to access said wireless access network, said point of access being **characterised in that** it further comprises
inserting means (502) for inserting at least one element of identification information (320) into said advertisement message prior to the sending of said advertisement message, wherein said at least one element of identification information identifies at least one backbone network type supported by said wireless access network.
